# EUROPÄISCHE PATENTANMELDUNG

(11) **EP 2 163 526 A1**
(43) Veröffentlichungstag der Anmeldung: **17.03.2010**
(21) Anmeldenummer: 08016110.2
(22) Anmeldetag: 12.09.2008
(51) Int. Cl.: C03B 7/086, C03B 9/41, C03B 11/16

(54) **Glasmaschine mit Direktantrieb**

(71) Anmelder: Waltec Maschinen GmbH, 96352 Wilhelmsthal-Steinberg (DE)
(72) Erfinder: Rose, Dieter, 96328 Küps (DE); Bassing, Werner, 96364 Marktrodach (DE)
(74) Vertreter: Köhler, Walter

(57) **Zusammenfassung**

Es wird eine Glasmaschine mit einem als elektrischer Motor ausgebildeten Direktantrieb beschrieben. Der Läufer des elektrischen Motors ist aus mindestens einem Läufersegment gebildet. Der Stator des elektrischen Motors ist aus mindestens einem Statorsegment gebildet, das einen aus Kernblechen gebildeten weichmagnetischen Kern und eine oder mehrere in Nuten angeordnete Spulenwicklungen (15) aufweist. Der Kern (14) weist mindestens ein parallel zu den Nuten angeordnetes Durchgangsloch (11d) auf, das von einem Bolzen (12) durchgriffen ist, wobei der Kern (14) auf dem Bolzen (12) durch Kraftschluss oder Stoffschluss fixiert ist.

## Beschreibung

Die Erfindung betrifft eine Glasmaschine mit Direktantrieb nach dem Oberbegriff des Anspruchs 1.

Unter Glasmaschinen werden hier Maschinen verstanden, die dafür vorgesehen sind, aus Glasschmelzen gebildete Glasprodukte, wie Flaschen, Trinkgläser und dergleichen, herzustellen. Glasmaschinen sind also Maschinen, in denen Glasschmelze gehandhabt wird, indem Glasschmelze aus einem Glasschmelzebehälter dosiert abgezogen wird und/oder in eine Glasform eingeführt wird. Es handelt sich um Glasschmelze-Zuführ- und/oder - Formmaschinen.

Glasmaschinen, wie Glas-Feeder oder Drehtische, werden herkömmlich mit Elektromotoren angetrieben, die über ein Zwischengetriebe mit der Glasmaschine verbunden sind. Das Zwischengetriebe weist mechanische Verluste auf und erhöht damit den Energiebedarf zum Betrieb der Glasmaschine und ist infolge der rauen Umgebungsbedingungen einem erhöhten Verschleiß unterworfen.

Es sind Glasmaschinen mit direktem Antrieb bekannt, wobei jedoch wegen des direkten Antriebes die zum Antrieb vorgesehenen elektrischen Antriebsmotoren Sonderanfertigungen sind. Die EP 1037859 B1 beschreibt einen Glas-Feeder mit elektrischem Linearmotor, die WO 00/39037 beschreibt einen Drehtisch.

Aufgabe der vorliegenden Erfindung ist es, eine Glasmaschine mit einem verbesserten Direktantrieb anzugeben.

Erfindungsgemäß wird diese Aufgabe mit dem Gegenstand des Anspruchs 1 gelöst. Es wird eine Glasmaschine mit einer Glasschmelzezufuhrvorrichtung, vorzugsweise Glas-Feeder genannt, mit einem Glasschmelzebehälter mit einer Ausgangsöffnung und einem durch diese auf- und abbewegten Kolben, vorzugsweise Plunger genannt, vorgeschlagen, wobei der Kolben mit einem elektrischen Antriebsmotor verbunden ist und ggf. ein Drehtisch mit Glasformen oder anderen Bearbeitungsvorrichtungen unmittelbar oder mittelbar der Glasschmelzwanne nachgeschaltet ist, wobei dieser Drehtisch zur Drehbewegung mit einem elektrischen Antriebsmotor verbunden ist, wobei vorgesehen ist, dass der elektrische Antriebsmotor des Kolbens und/oder des Drehtischs als Direktantrieb ausgebildet ist, wobei vorgesehen ist, dass der Stator des elektrischen Antriebsmotors aus mindestens einem Statorsegment gebildet ist, das einen aus übereinander angeordneten Kernblättern oder -platten gebildeten weichmagnetischen Kern und eine oder mehrere in Nuten angeordnete Spulenwicklungen aufweist, wobei die Nuten durch übereinander angeordnete Zähne der im Stapel angeordneten Kernblätter oder -platten gebildet sind,
dass der Kern mindestens ein parallel zu den Nuten angeordnetes Durchgangsloch aufweist, das von einer Durchgriffseinrichtung durchgriffen ist, und dass die Durchgriffseinrichtung eine Fixierungseinrichtung für die Kernblätter oder -platten darstellt.

Es wird also eine Glasmaschine mit einem elektrischen Antriebsmotor vorgeschlagen, dessen Stator aus einzelnen Segmenten ausgebildet ist, die gleichartig aufgebaut sind. Damit ist es möglich, mit einem Segmentprinzip elektrische Antriebsmotoren aufzubauen, die sich hinsichtlich ihrer Leistung, ihrer Bauform und ihrer Verwendung unterscheiden. Ein weiterer Vorteil ist, dass das Kernblatt- oder -plattenpaket des weichmagnetischen Kerns durch Durchgriffseinrichtungen, wie beispielsweise einfache Bolzen oder Rohre, so stabilisiert ist, dass es zugleich eine Stützfunktion für andere Bauelemente bzw. Baugruppen zu übernehmen vermag. Diese Ausbildung erleichtert weiter sowohl die Montage als auch den Service des elektrischen Motors und damit auch der Glasmaschine.

Es kann vorgesehen sein, dass die Kernblätter oder -platten als Kernbleche ausgebildet sind.

Es kann weiter vorgesehen sein, dass der Kern das Gehäuse des Statorsegments bildet. Bei dieser Ausführungsform ist also kein zusätzliches Gehäuse vorgesehen, das den Kern schützend umgibt und/oder das den Kern auf einer Montageplattform fixiert. Dadurch wird das Gewicht der Konstruktion reduziert und Material eingespart.

Es kann weiter vorgesehen sein, dass der Kern auf der Durchgriffseinrichtung durch Kraftschluss oder Stoffschluss fixiert ist.

Es kann vorgesehen sein, dass die Mantelfläche der Durchgriffseinrichtung mindestens abschnittsweise mit Übermaß zu dem Innenmaß des Durchgangslochs ausgebildet ist.

Es kann weiter vorgesehen sein, dass der Teilungsabstand mindestens zweier Durchgangslöcher ungleich dem Teilungsabstand der mit den zwei Durchgangslöchern zusammenwirkenden Durchgriffseinrichtungen ist. Die Differenz der Teilungsabstände kann vorzugsweise in dem für Presspassungen vorgesehenen Toleranzbereich liegen. Es ist also vorgesehen, die beispielsweise als Bolzen ausgebildeten Durchgriffseinrichtungen in den Kern einzupressen und damit kraftschlüssig mit dem Kern zu verbinden. Der Teilungsabstand der Durchgriffseinrichtungen kann durch eine gemeinsame Grundplatte definiert sein, in der die Durchgriffseinrichtungen befestigt sind, beispielsweise durch Einpressen, Einkleben oder Einschrauben.

Die Durchgriffseinrichtungen können vorzugsweise aus einem nichtmagnetischen Material gefertigt sein.

Es kann weiter vorgesehen sein, dass die Durchgangslöcher und/oder die Durchgriffseinrichtungen einen variablen Teilungsabstand aufweisen. Die Variation des Teilungsabstandes kann im Bereich der üblichen Fertigungstoleranzen liegen, er kann aber auch so groß gewählt sein, dass durch die Anordnung der Durchgriffseinrichtungen der Kern nur in einer Lage montierbar ist.

Die Durchgriffseinrichtung kann einen beliebigen Querschnitt aufweisen, doch es können Querschnittsformen aus beispielsweise fertigungstechnischen oder funktionellen Gründen bevorzugt sein.

Es kann vorgesehen sein, dass die Durchgriffseinrichtung einen kreisförmigen oder elliptischen Querschnitt aufweist.

Weiter kann die Durchgriffseinrichtung einen polygonalen oder sternförmigen Querschnitt aufweisen. Wenn die Durchgriffseinrichtung mit einem kreisförmigen Durchgangsloch gepaart ist, sind zwischen der Innenwand des Durchgangslochs und der Außenwand der Durchgriffseinrichtung Spalte ausgebildet, die mit einem geeigneten Kleber ausgefüllt, die Haftung zwischen dem Kernblatt- bzw. Kernplattenpaket und der Durchgriffseinrichtung verbessern können.

Es kann vorgesehen sein, dass die Kernblätter oder -platten des Kerns mit einem Thermoklebelack beschichtet sind.

Der Thermoklebelack kann aus zwei Komponenten gebildet sein, wobei die Oberseite des Kernblattes bzw. der Kernplatte mit der einen Komponente und die Unterseite des Kernblattes bzw. der Kernplatte mit der anderen Komponente beschichtet sein kann oder umgekehrt.

Einer der Längsabschnitte des Kernblattes bzw. der Kernplatte kann Zähne aufweisen, die kammartig angeordnet sind, wobei die Zähne einen Spulenkernabschnitt bilden oder als Kühlzahn ausgebildet sind.

Weiter kann vorgesehen sein, dass übereinander angeordnete Spulenkernabschnitte einen Spulenkern bilden, der von jeweils einer Spulenwicklung umgriffen ist.

Die Stirnabschnitte benachbarter Spulenkerne können eine unterschiedliche magnetische Polarität aufweisen. Die Spulenkerne können also in einer Reihe angeordnete Elektromagnete mit abwechselnder Polarität bilden.

Es kann vorgesehen sein, dass der elektrische Antriebsmotor ein Linearmotor, Bogenmotor oder Rotationsmotor ist. Als Linearmotor wird hier ein elektrischer Motor bezeichnet, dessen Läufer auf einer geradenförmigen Führungsbahn geführt ist. Als Bogenmotor wird hier ein elektrischer Motor bezeichnet, dessen Läufer nicht auf einer geradenförmigen Führungsbahn, sondern auf einer bogenförmigen Führungsbahn geführt ist. Bei der bogenförmigen Führungsbahn kann es sich vorzugsweise um einen Kreisbogen handeln, doch es kann auch jede andere stetige Kurve vorgesehen sein, beispielsweise ein Abschnitt einer Parabel oder einer Ellipse. Für von der Kreisbogenform deutlich abweichende Führungsbahnen können vorzugsweise Statorsegmente vorgesehen sein, deren Kernspulenstirnseiten diesem Kurvenverlauf folgen. Es kann in diesem Falle weiter vorgesehen sein, Statorsegmente mit unterschiedlichem Kurvenverlauf, insbesondere mit unterschiedlicher Krümmung, miteinander zu kombinieren, um über die gesamte Führungsbahnlänge einen nahezu konstanten Luftspalt zwischen Läufer und Stator auszubilden.

Die Erfindung wird nun anhand von Ausführungsbeispielen näher erläutert. Es zeigen
- Fig. 1a bis 1c: unterschiedliche Fertigungsstufen eines ersten Ausführungsbeispiels eines erfindungsgemäßen Statorsegments in perspektivischer Darstellung;
- Fig. 2: ein zweites Ausführungsbeispiel eines erfindungsgemäßen Statorsegments in perspektivischer Darstellung;
- Fig. 3a: einen Querschnitt des erfindungsgemäßen Statorsegments in Fig. 1;
- Fig. 3b: einen Querschnitt eines dritten Ausführungsbeispiels eines erfindungsgemäßen Statorsegments für einen Linearmotor;
- Fig. 4: ein viertes Ausführungsbeispiel eines erfindungsgemäßen Statorsegments in perspektivischer Darstellung;
- Fig. 5a und 5b: ein erstes Anordnungsbeispiel des Statorsegments in Fig. 4;
- Fig. 6a und 6b: ein zweites Anordnungsbeispiel des Statorsegments in Fig. 4;
- Fig. 7: Ausführungsbeispiele für Querschnitte von Durchgriffseinrichtungen;
- Fig. 8: einen Bogenmotor mit dem Statorsegment in Fig. 3a in schematischer Darstellung;
- Fig. 9: einen Linearmotor mit dem Statorsegment in Fig. 3b in schematischer Darstellung;
- Fig. 10: einen Glas-Feeder mit dem Linearmotor in Fig. 9 in schematischer Darstellung
- Fig. 11: einen Drehtisch mit einem Scheibenläufermotor und Statorsegmenten in Fig. 4;
- Fig. 12: eine Glasmaschine mit Glas-Feeder und Drehtisch.

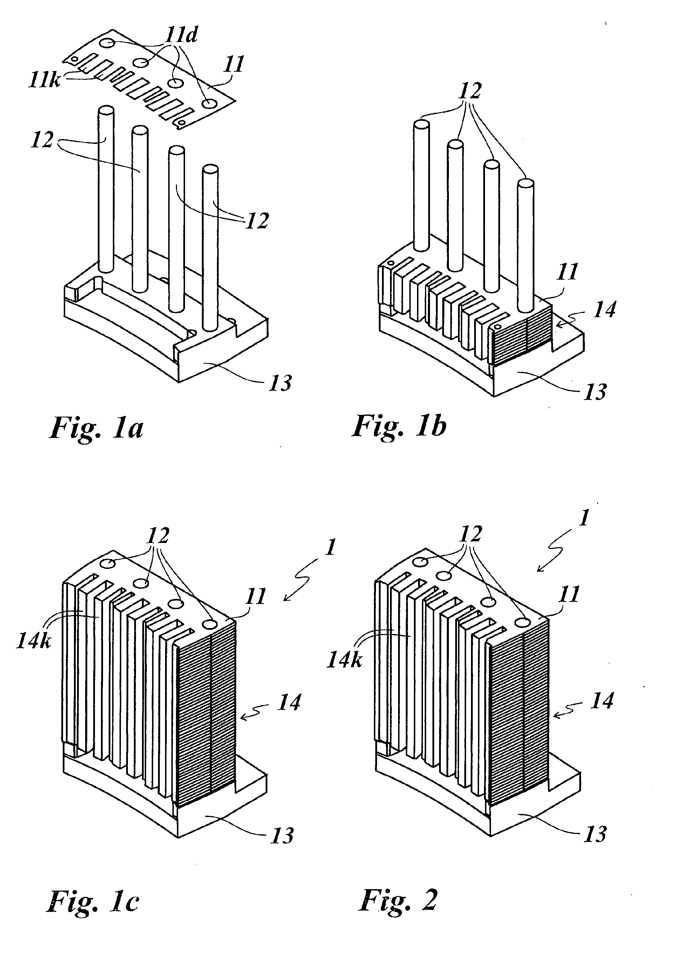

Die Fig. 1a bis 1c zeigen unterschiedliche Fertigungsstufen eines erfindungsgemäßen Statorsegments 1 eines Direktantriebs für eine Glasmaschine. Der Direktantrieb besteht aus einem elektrischen Antriebsmotor, der ohne Zwischenschaltung eines Getriebes mit dem angetriebenen Maschinenelement verbunden ist. Der elektrische Antriebsmotor kann als Linearmotor, als Bogenmotor oder als Rotationsmotor ausgebildet sein. Das Statorsegment 1 bildet einen Statorabschnitt oder den Stator des elektrischen Antriebsmotors, der in elektromagnetischem Kontakt zu einem aus Permanentmagneten gebildeten Läufer steht.

Das Statorsegment 1 weist übereinander angeordnete, als Kernbleche 11 ausgebildete Kernblätter bzw. Kernplatten, mehrere als Bolzen 12 ausgebildete Durchgriffseinrichtungen und eine Grundplatte 13 auf. Die übereinander angeordneten Kernbleche 11 bilden einen Kern 14. In dem in Fig. 1a bis 1c dargestellten Ausführungsbeispiel bilden etwa 400 Kernbleche 11 den Kern 14. Die Kernbleche 11 bestehen aus weichmagnetischem Material, beispielsweise aus Dynamoblech.

Die Kernbleche 11 weisen im Stapel miteinander fluchtende Durchgangslöcher 11d auf, die von den Bolzen 12 durchgriffen sind. Die Bolzen 12 sind in der Grundplatte 13 befestigt, indem das eine Ende der Bolzen 12 in die Grundplatte 13 eingreift und ihr anderes Ende frei absteht. Der Kern 14 liegt auf der Grundplatte 13 auf und wird dabei von den Bolzen 12 durchgriffen. In dem in Fig. 1a bis 1c dargestellten Ausführungsbeispiel sind vier zylinderförmige Bolzen 12 in der Grundplatte 13 vorgesehen und dementsprechend vier kreisförmige Durchgangslöcher 11d in den Kernblechen 11.

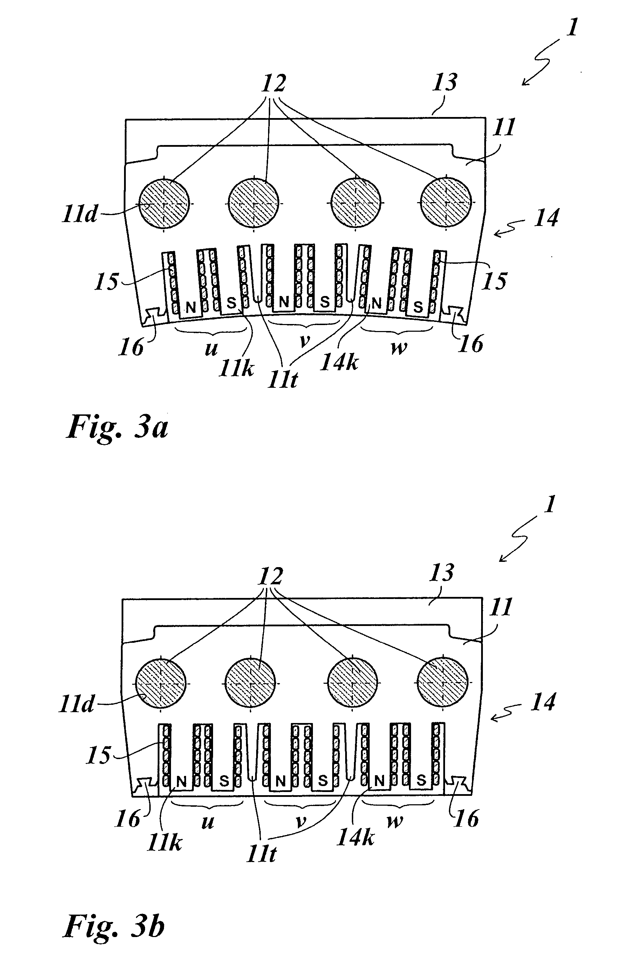

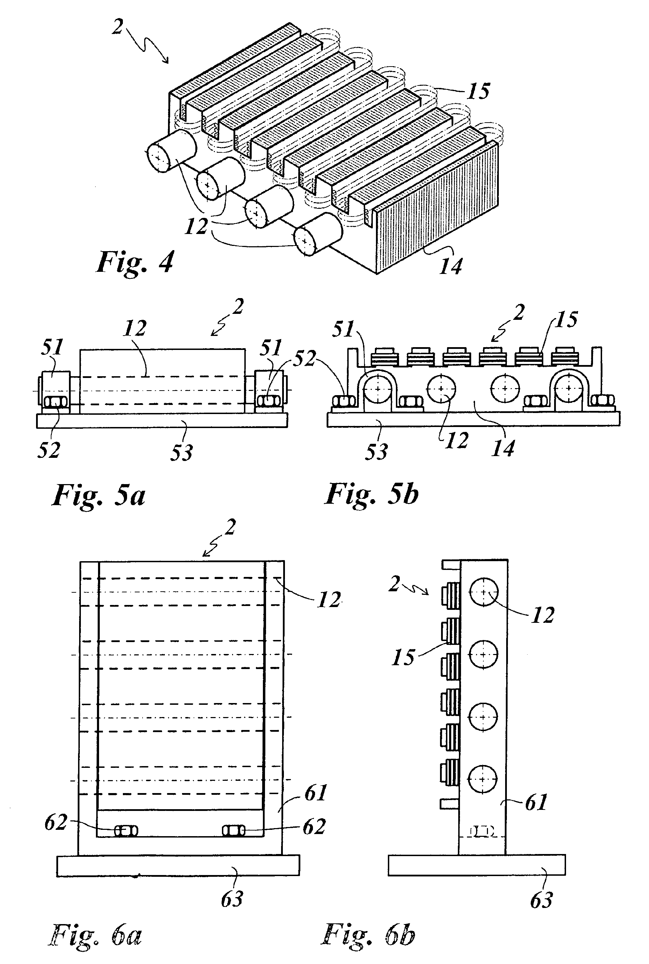

Die Kernbleche 11 sind in dem dem Läufer (in Fig. 1a bis 1c nicht dargestellt) zugewandten Längsabschnitt kammförmig ausgebildet, wobei sechs rechteckförmig ausgebildete Zähne Spulenkernabschnitte 11k bilden. Die Zähne der im Stapel übereinander angeordneten Kernbleche fluchten unter Ausbildung von Nuten. Die Spulenkernabschnitte 11k bilden bei der Anordnung der Kernbleche 11 im Kern 14 Spulenkerne 14k, die durch die Nuten voneinander getrennt sind und die für die Aufnahme von Spulenwicklungen 15 vorgesehen sind (siehe Fig. 3 und 4). Die Nuten verlaufen im Kern 14 senkrecht zu den Stirnflächen des Kerns und parallel zu den Längsachsen der Bolzen 12.

Zur Montage des Statorsegments 1 wird jeweils ein Teilstapel aus etwa 10 bis 20 übereinander gestapelten Kernblechen 11 gebildet, und die in der Grundplatte 13 fixierten Bolzen 12 werden in die Durchgangslöcher 11d eingeführt. Der Teilstapel wird sodann unter Druckeinwirkung auf die Grundplatte 13 bzw. auf bereits auf die Grundplatte 13 gestapelte Kernbleche 11 gepresst. Der Anpressdruck ist erforderlich, um die zwischen der Innenwand der Durchgangslöcher 11d und der Außenwand der Bolzen 12 ausgebildeten Reibkräfte zu überwinden. Die Kernbleche 11 sind auf der Ober- und Unterseite mit einem Thermolack beschichtet, der benachbarte Kernbleche 11 unter Druck- und Temperatureinwirkung miteinander verklebt. Vorteilhafterweise handelt es sich um eine Zweikomponenten-Lackbeschichtung, wobei die Vorder- und die Rückseite des Kernblechs 11 mit unterschiedlichen Komponenten beschichtet sind, die bei Temperatureinwirkung miteinander reagieren und eine dauerhafte Verbindung eingehen. Derartige Lacke sind aus der Motorenfertigung bekannt. Die Kernbleche 11 des vollständig aufgebauten Kernblechstapels werden unter Druck- und Temperatureinwirkung wie vorstehend beschrieben zum Kern 14 miteinander verklebt.

Zur Ausbildung einer kraftschlüssigen Verbindung zwischen dem Kern 14 und dem Bolzen 12 können vorzugsweise zwei Maßnahmen vorgesehen sein:
a) Der Außendurchmesser des Bolzens 12 ist mit Übermaß zu dem Innendurchmesser des Durchgangslochs 11d ausgebildet.
b) Der Teilungsabstand der Bolzen 12 ist größer oder kleiner als der Teilungsabstand der Durchgangslöcher 11d.

Der Begriff "Teilungsabstand" ist hier nicht an einen konstanten Teilungsabstand gebunden, wenngleich der konstante Teilungsabstand bevorzugt sein kann.

Mit der Maßnahme a) ist es möglich, bereits mit einem Bolzen 12 den Kern 14 zu klemmen, doch sind zwei und mehr Bolzen 12 bevorzugt. Wenn zwei Bolzen 12 vorgesehen sind, ist der Kern 14 gegen Verdrehen gesichert.

In Fig. 2 ist unter Umsetzung der Maßnahme b) ein Statorsegment 1 mit einem Kern 14 dargestellt, bei dem die in den Kernblechen 11 angeordneten Durchgangslöcher 11d und die Bolzen 12 einen variablen Teilungsabstand aufweisen. Folglich sind die Kernbleche 11 nur in einer bevorzugten Lage montierbar, so dass eine Fehlmontage ausgeschlossen ist. Die Übermaße bzw. Toleranzen der Teilungsabstände können im Bereich von hundertstel Millimetern liegen.

Die Fig. 3a und 3b zeigen nun Schnittansichten des Statorsegments 1, die den Aufbau des Statorsegments 1 weiter verdeutlichen.

Fig. 3a zeigt das durch die Spulenwicklungen 15 vervollständigte Statorsegment 1 in Fig. 1c in einer Schnittdarstellung. Das Statorsegment 1 ist für den Betrieb mit Dreiphasen-Wechselstrom vorgesehen. Die Spulenwicklungen 15 sind in die Nuten zwischen den Spulenkernabschnitten 11k eingebracht, die im Kern 14 Spulenkerne 14k bilden. Spulenwicklungen 15 und Spulenkerne 14k bilden Kernspulen, wobei jeweils zwei benachbarte Kernspulen eine Kernspulengruppe u, v, w bilden. Die Spulenwicklungen 15 der Kernspulengruppe sind so ausgebildet, dass die dem Läufer zugewandten Endabschnitte beider Spulenkerne 14k der Kernspulengruppe u, v, w magnetische Gegenpole bilden. Zwischen den benachbarten Spulengruppen u, v, w ist jeweils ein Zahn des Kernblechs angeordnet, der als Kühlzahn 11t ausgebildet ist. Die Kernspulen sind mit einer isolierenden Vergussmasse vergossen, die die Spulenwicklungen 15 umgibt und die Nuten im Kern 14 vollständig ausfüllt. Die in Fig. 3 nicht dargestellte Vergussmasse fixiert die Spulenwicklungen 15 und schützt sie vor Umwelteinflüssen, wie Feuchtigkeit und Verschmutzung.

Weiter weist das Kernblech 11 schwalbenschwanzförmige, im Stapel fluchtende Hinterschneidungen 16 auf, die Befestigungselemente aufnehmen können und/oder mit einer Vergussmasse ausgefüllt sein können. Die Lage und Geometrie der Hinterschneidungen 16 ist in Fig. 3a beispielhaft dargestellt. Hinterschneidungen 16 können auch in anderen Randbereichen des Kernblechs 11 bzw. des Kerns 14 vorgesehen sein, beispielsweise zur Aufnahme von Befestigungselementen, wobei dabei auch die Grundplatte 13 entbehrlich sein kann. Weitere Ausführungen ohne Grundplatte sind weiter unten in den Fig. 4 bis 6 dargestellt.

Die Stirnseiten der Spulenkernabschnitte 11k des Kernblechs bzw. der Spulenkerne 14 des Stapels bilden Abschnitte oder Tangenten eines Kreisbogens und stehen auf den Längsachsen der Spulenkernabschnitte 11k senkrecht.

Die weiter oben beschriebenen Durchgangslöcher 11d sind im hinteren Längsabschnitt des Kernblechs 11 mit einem konstanten Teilungsabstand angeordnet. Die Mittelpunkte der Durchgangslöcher 11d liegen in dem in Fig. 3a dargestellten Ausführungsbeispiel auf einer Geraden.

Fig. 3b zeigt nun ein Statorsegment 1, das sich von dem in Fig. 3a dargestellten Statorsegment dadurch unterscheidet, dass die Stirnseiten der Spulenkernabschnitte 11k in einer Ebene fluchten und auf den Längsachsen der Spulenkernabschnitte 11k senkrecht stehen. Das Statorsegment 1 ist vorzugsweise zum Aufbau eines Linearantriebs vorgesehen, bei dem der Läufer auf einer zu den Stirnseiten der Spulenkernabschnitte 11k bzw. der Spulenkerne 14k parallelen geradlinigen Führungsbahn geführt ist.

Fig. 4 zeigt ein viertes Ausführungsbeispiel eines erfindungsgemäßen Statorsegments. Ein Statorsegment 2 ist im Wesentlichen wie das in Fig. 3b beschriebene Statorsegment 1 aufgebaut, jedoch mit dem Unterschied, dass die Bolzen 12 zu beiden Seiten des Kerns 14 hervorragen und dass keine Grundplatte 13 vorgesehen ist. Die an den beiden langen Schmalseiten des Kerns 14 hervorragenden Endabschnitte der Bolzen 12 sind als Befestigungsabschnitte vorgesehen, um das Statorsegment 2 auf einem Maschinengestell oder dergleichen zu befestigen. Die Bolzen 12 sind jeweils in den von ihnen durchgriffenen Durchgangslöchern des Kerns 14 kraftschlüssig fixiert, weil der Außendurchmesser des Bolzens 12 mit Übermaß zu dem Innendurchmesser des Durchgangslochs ausgebildet ist.

Die Fig. 5a und 5b zeigen nun eine erste Befestigungsvariante des in Fig. 4 beschriebenen Statorsegments 2. Die Endabschnitte der beiden endständigen Bolzen 12 sind von Spannelementen 51 übergriffen, die mit Befestigungselementen auf einem plattenförmigen Gestell 53 befestigt sind. Die Spannelemente sind als U-förmige Bügel mit nach außen um 90° abgewinkelten Endabschnitten ausgebildet, wobei der Nenn-Innenabstand der beiden U-Schenkel dem Nenn-Durchmesser der Bolzen 12 entspricht. Die Befestigungselemente 52 sind in dem in den Fig. 5a und 5b dargestellten Ausführungsbeispiel als Schrauben ausgebildet, welche die abgewinkelten Endabschnitte des Spannelements 51 durchgreifen und beispielsweise mit Gewindelöchern im Gestell 53 zusammenwirken. Das Spannelement 51 ist maßlich so dimensioniert, dass im ungespannten Zustand ein Spalt zwischen dem Gestell 53 und der dem Gestell 53 zugewandten Fläche des abgewinkelten Endabschnitts des Spannelements 51 ausgebildet ist. Beim Anziehen der Befestigungselemente 52 wird der Spalt verringert oder beseitigt und damit die eine ebene Fläche bildende Unterseite des Kerns 14 auf die Oberseite des Gestells 53 gepresst.

Die Fig. 6a und 6b zeigen nun eine zweite Befestigungsvariante des in Fig. 4 beschriebenen Statorsegments 2. Das Statorsegment 2 ist in einem bügelförmigen Spannelement 61 befestigt. Das Spannelement 61 ist U-förmig ausgebildet. Die beiden U-Schenkel weisen Durchgangslöcher auf, die von den Endabschnitten der Bolzen 12 durchgriffen sind. Zur Erleichterung der Montage kann vorgesehen sein, dass der die beiden U-Schenkel verbindende Querschenkel des Spannelements 61 aufgetrennt ist, so dass das Spannelement 61 aus zwei L-förmigen Elementen gebildet ist, die von beiden Seiten auf die Bolzen 12 des Kerns 14 geschoben werden. Es kann eine kraftschlüssige Verbindung vorgesehen sein, d. h. die beiden Elemente des Spannelements 61 können auf die Endabschnitte der Bolzen 12 aufgepresst werden. Es kann anstelle der Pressverbindung oder zusätzlich aber auch vorgesehen sein, Spannelement 61 und Bolzen 12 stoffschlüssig miteinander zu verbinden, beispielsweise zu verkleben, oder eine lösbare Verbindung zu wählen, beispielsweise eine Schraubverbindung.

Der die beiden U-Schenkel verbindende einstückige oder mehrteilige Querschenkel des Spannelements 61 ist von Befestigungsmitteln 62 durchgriffen, die ihn auf einem Gestell 63 fixieren. Die Befestigungselemente 62 sind in dem in den Fig. 6a und 6b dargestellten Ausführungsbeispiel als Schrauben ausgebildet, die das Spannelement 61 durchgreifen und beispielsweise mit Gewindelöchern im Gestell 53 zusammenwirken.

Zur Befestigung der Statorsegmente 1 und 2 können auch Ankerelemente, wie T-Anker vorgesehen sein, die in Ausnehmungen oder Nuten des Kerns 14 eingreifen und die beispielsweise durch Schraubverbindungen auf dem Gestell befestigt sind. Es kann auch vorgesehen sein, dass in dem Kern 14 Gewindelöcher ausgebildet sind zur Aufnahme von Befestigungsschrauben.

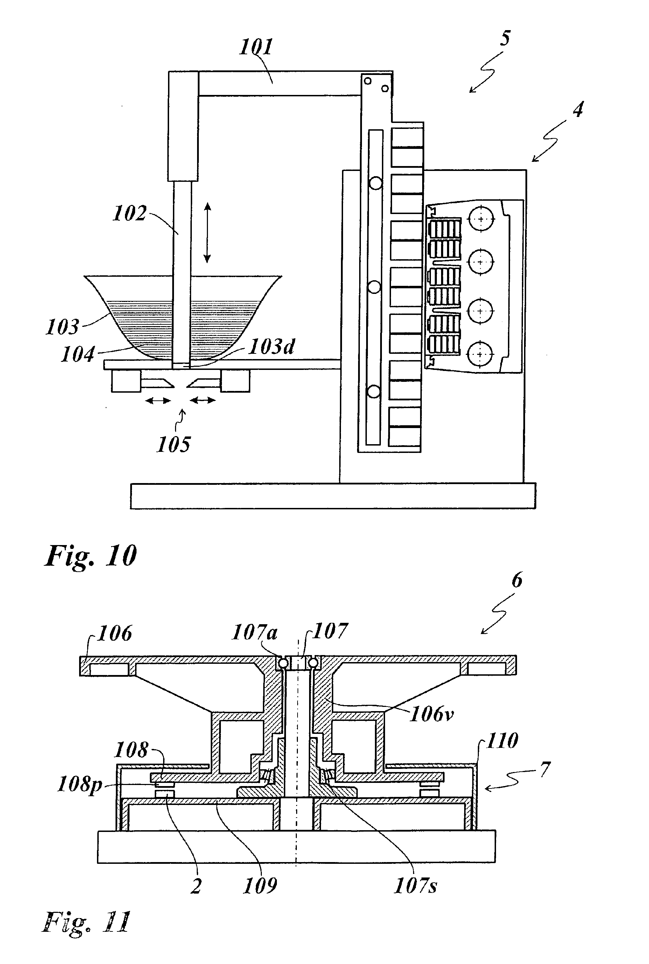

In den Fig. 1c und 2 bis 6b ist gezeigt, dass das Statorsegment 1, 2 eine Baugruppe bildet, die in den drei Raumachsen aufspannbar ist, so dass sehr unterschiedliche elektrische Motoren aufbaubar sind. So kann zum Beispiel mit der weiter oben in Fig. 5a und 5b dargestellten Aufspannung ein Scheibenläufermotor aufgebaut werden, indem mehrere der Statorsegmente 2 in Fig. 4 in einem Kreis auf einer Scheibe angeordnet werden, wobei die Stirnseiten der Spulenkerne der Scheibe abgewandt sind. Die auf diese Weise angeordneten Statorsegmente 2 bilden zwar ein Polygon, doch ist bei entsprechender Ausführung eine für die praktischen Belange ausreichende Annäherung an die Kreisform möglich, beispielsweise bei Verwendung von 12 oder mehr Statorsegmenten 2. Ein Ausführungsbeispiel des Scheibenläufermotors wird in Verbindung mit Fig. 11 noch näher beschrieben.

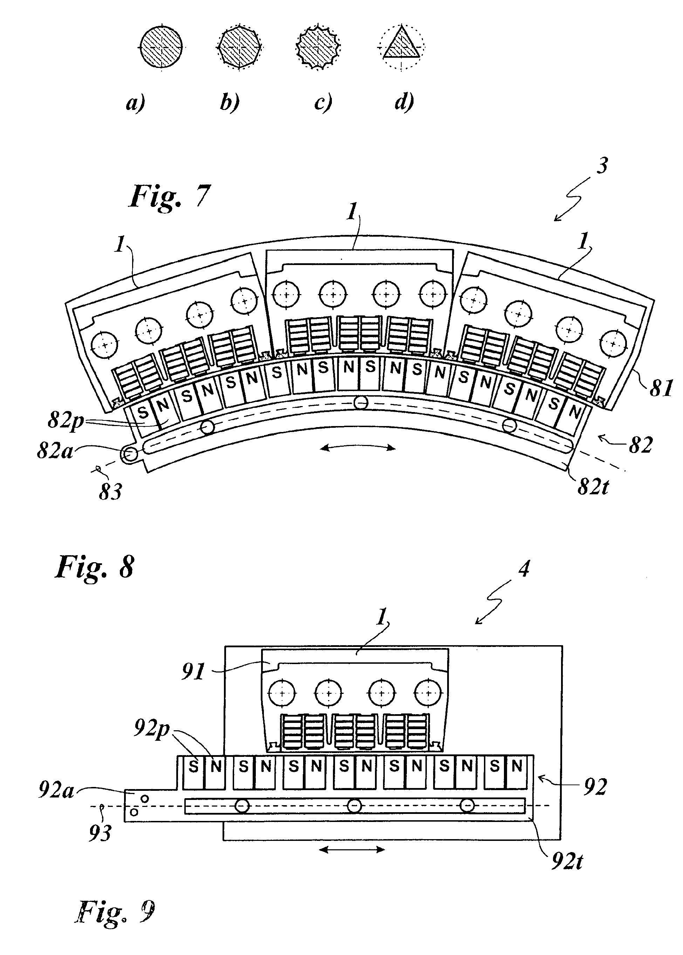

Fig. 7 zeigt Ausführungsbeispiele des Bolzens 12, die sich hinsichtlich ihrer Querschnittsgeometrie unterscheiden. Sämtliche Bolzenquerschnitte a) bis d) sind mit kreisförmigen Durchgangslöchern 11d gepaart. Folglich stimmt nur für Bolzenquerschnitt a) die Geometrie des Durchgangslochs mit der Geometrie des Bolzenquerschnitts überein. Es kann jedoch auch für die Bolzenquerschnitte b) bis d) die Geometrie des Durchgangslochs so gewählt sein, dass sie mit der Geometrie des Bolzenquerschnitts übereinstimmt, d. h. das Durchgangsloch 11d entsprechend verzahnte oder kantige komplementäre Konturen aufweist.

Die Ausführungsform a) kann bevorzugt sein, weil sie besonders einfach herstellbar ist. Die Ausführungsformen b) und d) zeichnen sich dadurch aus, dass zwischen der Innenwand des Durchgangslochs 11d und der Außenwand des Bolzens 12 Spalte ausgebildet sind, die mit einem geeigneten Kleber ausgefüllt, die Haftung zwischen dem Kernblechpaket 14 und den Bolzen 12 verbessern können. Es ist prinzipiell möglich, einen beliebigen Bolzenquerschnitt zu wählen.

Die Fig. 8 zeigt nun in schematischer, unmaßstäblicher Darstellung die Verwendung des weiter oben in Fig. 3a dargestellten Statorsegments 1 in einem Bogenmotor 3 mit einem Stator 81 und einem Läufer 82, der auf einer Führungsbahn 83 geführt ist.

Als Bogenmotor wird hier ein elektrischer Motor bezeichnet, dessen Läufer auf einer bogenförmigen Führungsbahn geführt ist. Dabei kann der Läufer vorzugsweise drehstarr auf einem Führungselement angeordnet sein, das vorzugsweise spielfrei in der Führungsbahn geführt ist. Bei der bogenförmigen Führungsbahn kann es sich vorzugsweise um einen Kreisbogen handeln, doch es kann auch jede andere stetige Kurve vorgesehen sein, beispielsweise ein Abschnitt einer Parabel oder einer Ellipse. Wenn eine von der Kreisbogenform nur gering abweichende Führungsbahn vorgesehen ist, ist das in Fig. 3a beschriebene Statorsegment ohne Einschränkungen verwendbar. Für von der Kreisbogenform deutlich abweichende Führungsbahnen können vorzugsweise Statorsegmente vorgesehen sein, deren Kernspulenstirnseiten diesem Kurvenverlauf folgen. Es kann in diesem Falle weiter vorgesehen sein, Statorsegmente mit unterschiedlichem Kurvenverlauf, insbesondere mit unterschiedlicher Krümmung, miteinander zu kombinieren.

Der Stator 81 des Bogenmotors 3 weist drei nebeneinander angeordnete Statorsegmente 1 auf. Die Stirnflächen der Spulenkerne bilden Tangentenflächen an eine Kreisbogenfläche, deren Mittelpunkt mit dem Mittelpunkt der kreisbogenförmigen Führungsbahn 83 zusammenfällt. Der Läufer 82 des Bogenmotors 3 weist Permanentmagnete 82p auf, die mit abwechselnder Polarität nebeneinander angeordnet sind und deren Stirnflächen unter Ausbildung eines Luftspaltes den Stirnflächen der Spulenkerne zugewandt auf einer Trägerplatte 82t angeordnet sind.

Der Bogenmotor 3 weist einen Abtrieb 82a auf, der in dem in Fig. 8 dargestellten Ausführungsbeispiel als Lagerbohrung in einem Endabschnitt der Trägerplatte 82t ausgebildet ist. Der Mittelpunkt der Lagerbohrung liegt auf der Führungsbahn 83.

Die Fig. 9 zeigt nun in schematischer, unmaßstäblicher Darstellung die Verwendung des weiter oben in Fig. 3b dargestellten Statorsegments 1 in einem Linearmotor 4 mit einem Stator 91 und einem Läufer 92, der auf einer linearen Führungsbahn 93 geführt ist.

Als Linearmotor wird hier ein elektrischer Motor bezeichnet, dessen Läufer auf einer geradenförmigen Führungsbahn geführt ist.

Der Stator 91 des Linearmotors 4 ist aus einem Statorsegment 1 gebildet. Es können aber auch je nach Leistungsbedarf und Verfahrweg des Läufers 92 zwei und mehr Statorsegmente 1 hintereinander angeordnet sein. Die Stirnflächen der Spulenkerne der Statorsegmente 1 fluchten miteinander längs einer ebenen Fläche, die parallel zu der geradenförmigen Führungsbahn 93 angeordnet ist. Der Läufer 92 des Linearmotors 9 weist Permanentmagnete 92p auf, die mit abwechselnder Polarität nebeneinander angeordnet sind und deren Stirnflächen unter Ausbildung eines Luftspaltes den Stirnflächen der Spulenkerne zugewandt auf einer Trägerplatte 92t angeordnet sind.

Der Linearmotor 4 weist einen Abtrieb 92a auf, der in einem Endabschnitt der Trägerplatte 92t angeordnet ist. Der Abtrieb 92a ist in dem in Fig. 9 dargestellten Ausführungsbeispiel durch zwei Befestigungslöcher gebildet, die zur Aufnahme eines Befestigungselements bestimmt sind, beispielsweise einer Schraube oder eines Niets.

Fig. 10 zeigt nun beispielhaft die Verwendung des vorstehend in Fig. 9 beschriebenen Linearmotors 4 in einem Glas-Feeder 5. Bei dem Glas-Feeder 5 handelt es sich um eine direkt angetriebene Maschine, die Glastropfen für eine Glasformmaschine bereitstellt. Über einem Glasschmelzebehälter 103 mit einer Glasschmelze 104 ist ein senkrecht verfahrbarer Plunger 102 angeordnet, der in seiner unteren Stellung eine im Boden des Glasschmelzebehälters 103 als Durchgangsloch ausgebildete Ausgangsöffnung 103d verschließt und in seiner oberen Stellung die Ausgangsöffnung 103d freigibt. Durch die Ausgangsöffnung 103d tritt im geöffneten Zustand Glasschmelze 104 aus, die einen Tropfen bildet, der von einer Glastropfen-Schere 105 abgetrennt wird.

Der Plunger 102 ist mit einem waagerecht angeordneten Verbindungsbalken 101 verbunden, der drehstarr mit dem Abtrieb des senkrecht angeordneten Linearmotors 4 verbunden ist. Die Führungsbahn des Läufers des Linearmotors 4 verläuft parallel zur linearen Bewegungsbahn des Plungers 102.

Weitere Elemente bzw. Baugruppen, wie eine Motorsteuerung, Mittel zum Gewichtsausgleich und dergleichen, sind in Fig. 10 nicht dargestellt. Wesentlich für die in Fig. 10 dargestellte Glasmaschine ist der Direktantrieb des Plungers 102 durch den Linearmotor 4.

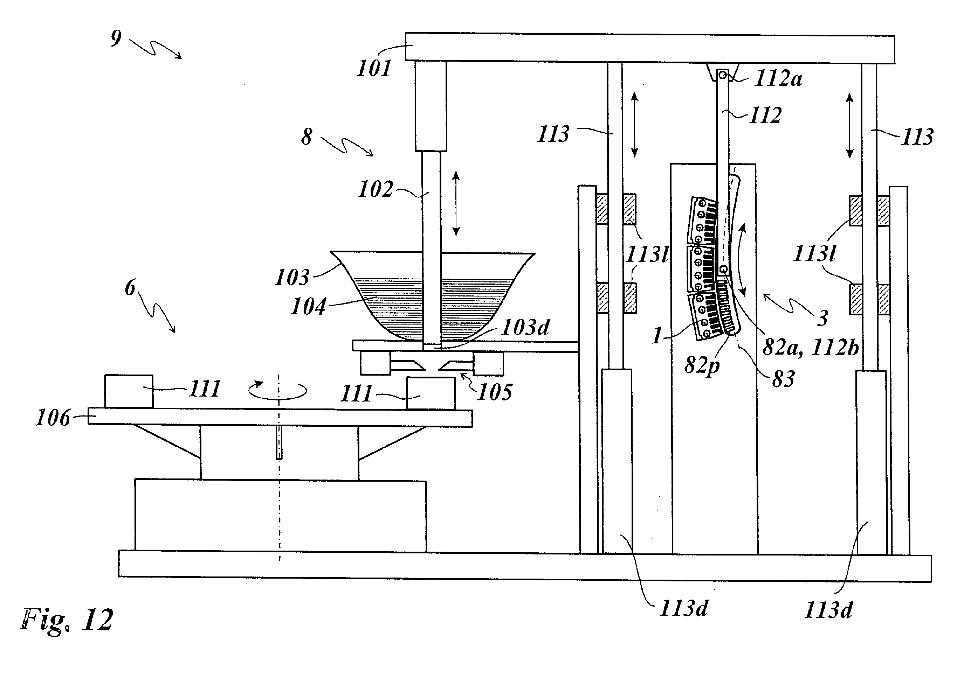

Fig. 11 zeigt nun einen Drehtisch 6 mit einer von einem Scheibenläufermotor 7 direkt angetriebenen drehbaren Drehtischplatte 106. Der Drehtisch 6 ist beispielsweise zur Aufnahme von Glasformen bestimmt, wie weiter untern in Fig. 12 dargestellt.

Der Drehtisch 6 weist einen senkrecht angeordneten zentralen Aufnahmeschaft 107 auf, der eine Grundplatte des Drehtischs 6 senkrecht durchgreift. Bei dem Aufnahmeschaft 107 handelt es sich um einen zweifach abgesetzten zylindrischen Schaft.

Die Drehtischplatte 106 geht in ihrem unteren Endabschnitt in einen mehrfach abgestuften Verbindungsabschnitt 106v über. Der Verbindungsabschnitt 106v ist an seinem unteren Endabschnitt drehstarr mit einem Rotor 108 des Scheibenläufermotors 7 verbunden. Der Rotor 108 trägt auf seiner Unterseite kreisringförmig und mit abwechselnder Polarität angeordnete Permanentmagnete 108p. Unter dem Rotor 108 ist ein Stator 109 angeordnet, der sich auf der Grundplatte des Drehtisches 106 drehfest abstützt. Auf der Oberseite des Stators 109, die dem Rotor 108 zugewandt ist, sind polygonförmig Statorsegmente 2 (siehe Fig. 4) angeordnet. Dabei sind die Stirnseiten der Spulenkerne unter Ausbildung eines Luftspaltes den Permanentmagneten 108p zugewandt. Die Statorsegmente 2 können beispielsweise mit Dreiphasenstrom erregt sein, wie weiter oben beschrieben.

Auf dem unteren Absatz des Aufnahmeschafts 107 stützt sich ein Stützring 107r ab, der zur Aufnahme des Innenrings eines Schrägkugellagers 107s bestimmt ist. Auf dem Außenring des Schrägkugellagers 107s ist der untere Abschnitt des Verbindungsabschnitts 106v drehbar abstützt. Der obere Abschnitt des Verbindungsabschnitts stützt sich über ein Radialkugellager 107a an dem Aufnahmeschaft 107 ab. Das Radialkugellager 107a liegt mit der Stirnfläche seines inneren Lagerrings auf dem oberen Absatz des Aufnahmeschafts 107 auf.

Der Scheibenläufermotor 7 ist mit einer becherförmigen Gehäuseabdeckung 110, die von dem Verbindungsabschnitt 106v zentrisch durchgriffen ist und auf der Grundplatte des Drehtischs 6 aufliegt, überdeckt. Zwischen der Gehäuseabdeckung 110 und der Außenwand des Verbindungsabschnitts 106v kann eine Dichtung vorgesehen sein, die mindestens feste Partikel zurückhält. In dem Raum zwischen der Gehäuseabdeckung 110 und der Außenwand des Verbindungsabschnitts 106v kann auch ein Überdruck eingestellt werden, der einem Fremdkörpereintritt entgegenwirkt. Zusätzlich kann in diesem Raum auch eine Kühlung, zum Beispiel durch ein entsprechendes Kühlmedium realisiert sein.

Fig. 12 zeigt nun eine Glasmaschine 9, die zur Herstellung von Formglas bestimmt ist. Die Glasmaschine 9 weist einen Glas-Feeder 8 zum Bereitstellen von Glastropfen auf, sowie einen Drehtisch 6, wie vorstehend in Fig. 11 beschrieben.

Der Glas-Feeder 8 ist im Wesentlichen wie der weiter oben in Fig. 10 beschriebene Glas-Feeder 5 aufgebaut, mit dem Unterschied, dass anstelle des Linearmotors 4 der weiter oben in Fig. 8 beschriebene Bogenmotor 3 vorgesehen ist. Der Abtrieb 82a des Bogenmotors 3 ist über einen Koppelstab 112 mit dem Verbindungsbalken 101 des Glas-Feeders 8 verbunden. Der Koppelstab 112 ist über einen oberen Gelenkpunkt 112a mit dem Verbindungsbalken 101 ortsfest verbunden und über einen unteren Gelenkpunkt 112b mit dem Abtrieb 82a des Bogenmotors 3. Der Verbindungsbalken 101 stützt sich nun über zwei Führungsstäbe 113 über Dämpfungsglieder 113d auf einer Grundplatte der Glasmaschine 9 ab. Die Dämpfungsglieder 113d können weiter zum Gewichtsausgleich bestimmt sein. Die Führungsstäbe 113 sind in vertikalen Geradführungen 113I geführt, bei denen es sich beispielsweise um Gleitführungen handeln kann. Der Koppelstab 112 ist an seinen beiden Endabschnitten drehbar gelagert. Er vermeidet Zwangskräfte, die bei starrer Kopplung zwischen dem bogenförmigen Abtrieb des Bogenmotors 3 und den vertikalen Geradführungen 113I auftreten können. Es kann vorgesehen sein, die Länge des Koppelstabs 112 variabel einstellbar zu machen, so dass auf einfache Weise die Lage des Plungers 102 justierbar ist.

Der untere Endabschnitt des mit dem Verbindungsbalken 101 starr verbundenen Plungers 102 durchgreift in seiner unteren Totlage die Ausgangsöffnung 103d des mit Glasschmelze 104 gefüllten Glasschmelzebehälters 103. Der Plunger gibt in seiner oberen Totlage die Ausgangsöffnung 103d frei und gibt so Glasschmelze frei, die einen Glastropfen bildet. Der Glastropfen wird von der Glastropfen-Schere 105 abgetrennt und durch Schwerkraft in eine Glasform 111 gefördert (siehe auch Fig. 10).

Mehrere Glasformen 111 sind auf der Drehtischplatte 106 des Drehtischs 6 kreisringförmig angeordnet. Bei Drehung der Drehtischplatte wird eine gefüllte Glasform unter dem Glas-Feeder 8 fortgedreht und eine leere Glasform bereitgestellt. Weitere Baugruppen, wie beispielsweise Vorrichtungen zur Entnahme und/oder Übergabe halbfertiger oder fertiger Glasartikel, Blasvorrichtungen und dergleichen sind in Fig. 12 nicht dargestellt.

In den vorstehend beschriebenen Ausführungsbeispielen sind keine Mittel zur Kühlung des Statorsegments 1 beschrieben. Das Kernblechpaket kann beispielsweise an der Rückseite, d. h. an der dem Läufer abgewandten Seite, Ausnehmungen zur Aufnahme von Kühlmittelleitungen aufweisen, die von einem Kühlmittel durchflossen sind. Das Kühlmittel kann jedoch auch durch das Kernblechpaket fließen, beispielsweise durch zwischen der Außenseite der Bolzen und der Innenwand der Durchgangslöcher ausgebildete offene Hohlräume, die weiter oben in Fig. 7 beschrieben sind.

### Bezugszeichenliste

- 1: Statorsegment
- 2: Statorsegment
- 3: Bogenmotor
- 4: Linearmotor
- 5: Glas-Feeder
- 6: Drehtisch
- 7: Scheibenläufermotor
- 8: Glas-Feeder
- 9: Glasmaschine
- 11: Kernblech
- 11d: Durchgangsloch
- 11k: Spulenkernabschnitt
- 11t: Kühlzahn
- 12: Bolzen
- 13: Grundplatte
- 14: Kern
- 14k: Spulenkern
- 15: Spulenwicklung
- 16: Hinterschneidung
- 51: Spannelement
- 52: Befestigungselement
- 53: Gestell
- 61: Spannelement
- 62: Befestigungselement
- 63: Gestell
- 81: Stator
- 82: Läufer
- 82a: Abtrieb
- 82p: Permanentmagnet
- 82t: Trägerplatte
- 83: Führungsbahn
- 91: Stator
- 92: Läufer
- 92a: Abtrieb
- 92p: Permanentmagnet
- 93: Führungsbahn
- 101: Verbindungsbalken
- 102: Plunger
- 103: Glasschmelzebehälter
- 103d: Ausgangsöffnung
- 104: Glasschmelze
- 105: Glastropfen-Schere
- 106: Drehtischplatte
- 106v: Verbindungsabschnitt
- 107: zentraler Aufnahmeschaft
- 107a: Radialkugellager
- 107r: Stützring
- 107s: Schrägkugellager
- 108: Scheibenläufer-Rotor
- 108p: Permanentmagnet
- 109: Scheibenläufer-Stator
- 110: Gehäuseabdeckung
- 111: Glasform
- 112: Koppelstab
- 112a: oberer Gelenkpunkt
- 112b: unterer Gelenkpunkt
- 113: Führungsstab
- 113lI: vertikale Geradführung
- 113d: Dämpfungsglied

## Patentansprüche

1. Glasmaschine mit einer Glasschmelzezufuhrvorrichtung, vorzugsweise Glas-Feeder genannt, mit einem Glasschmelzebehälter (103) mit einer Ausgangsöffnung (103d) und einem durch diese auf- und abbewegten Kolben (102), vorzugsweise Plunger genannt, wobei der Kolben (102) mit einem elektrischen Antriebsmotor (3, 4) verbunden ist und ggf. ein Drehtisch (6) mit Glasformen (111) oder anderen Bearbeitungsvorrichtungen unmittelbar oder mittelbar dem Glasschmelzebehälter (103) nachgeschaltet ist, wobei dieser Drehtisch (6) zur Drehbewegung mit einem elektrischen Antriebsmotor (7) verbunden ist, wobei vorgesehen ist, dass der elektrische Antriebsmotor (3, 4; 7) des Kolbens (102) und/oder des Drehtischs (6) als Direktantrieb ausgebildet ist,
**dadurch gekennzeichnet,**
**dass** der Stator des elektrischen Antriebsmotors (3, 4; 7) aus mindestens einem Statorsegment (1, 2) gebildet ist, das einen aus übereinander angeordneten Kernblättern oder -platten (11) gebildeten weichmagnetischen Kern (14) und eine oder mehrere in Nuten angeordnete Spulenwicklungen aufweist, wobei die Nuten durch übereinander angeordnete Zähne der im Stapel angeordneten Kernblätter oder -platten (11) gebildet sind,
**dass** der Kern (14) mindestens ein parallel zu den Nuten angeordnetes Durchgangsloch (11d) aufweist, das von einer Durchgriffseinrichtung (12) durchgriffen ist, und dass die Durchgriffseinrichtung (12) eine Fixierungseinrichtung für die Kernblätter oder -platten (11) darstellt.

2. Glasmaschine nach Anspruch 1,
**dadurch gekennzeichnet,**
**dass** die Kernblätter oder -platten (11) als Kernbleche ausgebildet sind.

3. Glasmaschine nach Anspruch 1 oder 2,
**dadurch gekennzeichnet,**
**dass** der Kern (14) das Gehäuse des Statorsegments (1, 2) bildet.

4. Glasmaschine nach einem der vorangehenden Ansprüche,
**dadurch gekennzeichnet,**
**dass** der Kern (14) auf der Durchgriffseinrichtung (12) durch Kraftschluss oder Stoffschluss fixiert ist.

5. Glasmaschine nach einem der vorangehenden Ansprüche,
**dadurch gekennzeichnet,**
**dass** die Mantelfläche der Durchgriffseinrichtung (12) mindestens abschnittsweise mit Übermaß zu dem Innenmaß des Durchgangslochs (11d) ausgebildet ist.

6. Glasmaschine nach einem der Ansprüche 1 bis 4,
**dadurch gekennzeichnet,**
**dass** der Teilungsabstand mindestens zweier Durchgangslöcher (11d) ungleich dem Teilungsabstand der mit den zwei Durchgangslöchern (11d) zusammenwirkenden Durchgriffseinrichtungen (12) ist.

7. Glasmaschine nach Anspruch 6,
**dadurch gekennzeichnet,**
**dass** die Durchgangslöcher (11d) und/oder die Durchgriffseinrichtungen (12) einen variablen Teilungsabstand aufweisen.

8. Glasmaschine nach einem der vorangehenden Ansprüche,
**dadurch gekennzeichnet,**
**dass** die Durchgriffseinrichtung (12) einen kreisförmigen oder elliptischen Querschnitt aufweist.

9. Glasmaschine nach einem der vorangehenden Ansprüche,
**dadurch gekennzeichnet,**
**dass** die Durchgriffseinrichtung (12) einen polygonalen oder sternförmigen Querschnitt aufweist.

10. Glasmaschine nach einem der vorangehenden Ansprüche,
**dadurch gekennzeichnet,**
**dass** die Kernblätter oder -platten (11) mit einem Thermoklebelack beschichtet sind.

11. Glasmaschine nach Anspruch 10,
**dadurch gekennzeichnet,**
**dass** der Thermoklebelack aus zwei Komponenten gebildet ist, wobei die Oberseite des Kernblattes bzw. der Kernplatte (11) mit der einen Komponente und die Unterseite des Kernblattes bzw. der Kernplatte (11) mit der anderen Komponente beschichtet ist oder umgekehrt.

12. Glasmaschine nach Anspruch 10 oder 11,
**dadurch gekennzeichnet,**
**dass** einer der Längsabschnitte des Kernblattes bzw. der Kernplatte (11) Zähne aufweist, die kammartig angeordnet sind, wobei die Zähne einen Spulenkernabschnitt (11k) bilden oder als Kühlzahn (11t) ausgebildet sind.

13. Glasmaschine nach Anspruch 12,
**dadurch gekennzeichnet,**
**dass** übereinander angeordnete Spulenkernabschnitte (11 k) einen Spulenkern (14k) bilden, der von jeweils einer Spulenwicklung (15) umgriffen ist.

14. Glasmaschine nach Anspruch 13,
**dadurch gekennzeichnet,**
**dass** die Stirnabschnitte benachbarter Spulenkerne (14k) eine unterschiedliche magnetische Polarität aufweisen.

15. Glasmaschine nach einem der vorangehenden Ansprüche,
**dadurch gekennzeichnet,**
**dass** der elektrische Antriebsmotor ein Linearmotor, Bogenmotor oder Rotationsmotor ist.
